(19) Europäisches Patentamt
European Patent Office
Office européen des brevets

(11) **EP 2 068 134 B1**

(12) **EUROPÄISCHE PATENTSCHRIFT**

(45) Veröffentlichungstag und Bekanntmachung des Hinweises auf die Patenterteilung:
**20.03.2013 Patentblatt 2013/12**

(51) Int Cl.:
***G01J 3/28*** *(2006.01)*

(21) Anmeldenummer: **09156127.4**

(22) Anmeldetag: **03.11.2001**

(54) **Verfahren zur Untergrundbestimmung und -korrektur von breitbandigem Untergrund**

Method for calculating and correcting a broadband baseline

Procédé de détermination et de correction de bruit de fond à large bande

(84) Benannte Vertragsstaaten:
**AT BE CH CY DE DK ES FI FR GB GR IE IT LI LU MC NL PT SE TR**

(30) Priorität: **13.11.2000 DE 10055905**

(43) Veröffentlichungstag der Anmeldung:
**10.06.2009 Patentblatt 2009/24**

(62) Dokumentnummer(n) der früheren Anmeldung(en) nach Art. 76 EPÜ:
**01993819.0 / 1 336 084**

(73) Patentinhaber: **Leibniz - Institut für Analytische Wissenschaften**
**- ISAS - E.V.**
**44139 Dortmund (DE)**

(72) Erfinder:
• **Florek, Stefan**
  **12526 Berlin (DE)**
• **Okruss, Michael**
  **14482 Potsdam (DE)**
• **Becker-Ross, Helmut**
  **12557 Berlin (DE)**

(74) Vertreter: **Weisse, Renate**
**Patentanwälte Weisse & Wolgast**
**Bleibtreustrasse 38**
**10623 Berlin (DE)**

(56) Entgegenhaltungen:
• **SONNEVELD, VISSER: "Automatic collection of powder data from photographs" JOURNAL OF APPLIED CRYSTALLOGRAPHY, Bd. 8, Nr. 1, 1975, Seiten 1-7, XP002529869**
• **JUWHAN LIU AND JACK L KOENIG: "A New Baseline Correction Algorithm Using Objective Criteria" APPLIED SPECTROSCOPY, THE SOCIETY FOR APPLIED SPECTROSCOPY. BALTIMORE, US, Bd. 41, Nr. 3, 1. Januar 1987 (1987-01-01), Seiten 447-449, XP007908640 ISSN: 0003-7028**
• **GOEHNER R P: "Background Subtract Subroutine for Spectral Data" ANALYTICAL CHEMISTRY, AMERICAN CHEMICAL SOCIETY. COLUMBUS, US, Bd. 50, Nr. 8, 1. Juli 1978 (1978-07-01), Seiten 1223-1225, XP007908639 ISSN: 0003-2700**

**Beschreibung**

**Technisches Gebiet**

Die Erfindung betrifft ein Verfahren zur Untergrundbestimmung und- Korrektur von breitbandigem Untergrund nach dem Oberbegriff des Anspruchs 1.

**Stand der Technik**

Es ist bekannt, hochaufgelöste Spektren mittels Echelle-Spektrometern zu erzeugen, bei denen sich der Wellenlängenbereich auf ein Vielzahl von Ordnungen verteilt. Die Ordnungen werden quer zur Dispersionsrichtung des Echellegitters (Hauptdispersionsrichtung) mittels eines weiteren Dispersionselementes getrennt. Beispiele solcher Anordnungen sind in dem Aufsatz "Adaptation of an echelle spectrograph to a large CCD detector" von S. Florek, H. Becker-Roß, T. Florek in Fresenius J. Anal. Chem. (1996) 355, Seiten 269-271 beschrieben. Hier wird ein Echelle-Gitter verwendet, bei welchem sich die interessierenden Wellenlängen des UV/VIS-Bereichs etwa in 80ter Ordnung befinden.

Bei diesen Spektrometern wird ein kleiner Spektralbereich aus dem Spektrum eines Spektrometers niedriger Auflösung mittels eines Austrittsspalts ausgewählt und mittels Diodenzeilen oder dergleichen detektiert. Bei der punktweisen Aufnahme der Spektren ist man entweder auf eine gewisse Anzahl von Punkten oder Spektralbereichen begrenzt, die mit jeweils zugehörigen Detektoren erfasst werden, oder das Spektrum wird durch Drehung von Gitter und/oder Prisma auf den Detektor geschoben.

Neuere Spektrometer sind mit Flächendetektoren ausgestattet. Diese ermöglichen die simultane Aufnahme des gesamten Spektrums oder zumindest großer Bereiche davon. Bei der Verwendung derartiger Flächendetektoren ist es wichtig, eine eindeutige Zuordnung der Pixelposition zu einer Wellenlänge zu kennen und möglichst das gesamte Licht einer Wellenlänge für das Spektrum zu erfassen. Durch Veränderungen des Spektrometers aufgrund von Temperaturschwankungen, Erschütterungen und dergleichen wird diese Zuordnung jedoch gestört. Weiterhin verteilt sich das Licht einer Wellenlänge üblicherweise auf mehrere Pixel, deren Intensitäten aufaddiert werden müssen, um ein Spektrum mit gutem Signal-Rauschverhältnis zu erhalten. Dabei muß berücksichtigt werden, daß die Ordnungen nicht exakt gerade, sondern leicht gekrümmt, nicht parallel und nicht äquidistant auf dem Detektor verlaufen.

Spektren umfassen häufig nicht nur Intensitätswerte aufgrund erwünschter Prozesse, etwa Absorptions. oder Emissionslinien, sondern auch breitbandigen und/oder strukturierten Untergrund. Ein solcher Untergrund ist häufig unerwünscht.

Der Aufsatz "Automatic Collection of Powder Data from Photographs" von E.J.Sonneveld und J.W.Visser in J.Appl.Cryst. (1975), Bd. 8, Seite 1 offenbart ein Verfahren, bei welchem von einer aufgenommenen Kurve als erste Näherung jeder 20.Punkt verwendet wird. Hierbei handelt es sich um eine Reduzierung der DatenmengeDabei besteht die Gefahr, dass die Maxima und Minima in der Kurve erhalten bleiben. In einem zweiten Schritt wird ein Wert durch den Mittelwert aus den benachbarten Werten ersetzt, wenn der Wert oberhalb des Mittelwertes der Nachbarwerte liegt. Der Wert an dem Punkt selber wird nicht berücksichtigt. Probleme ergeben sich, wenn die Untergrundkurve gekrümmt ist. Das Verfahren muß dann geändert werden, indem eine Konstante eingeführt wird, die von der Krümmung der Kurve abhängig ist. Eine solche Konstante kann praktisch nicht automatisch, d.h. per Computerprogramm bestimmt werden. Das Verfahren der birgt somit den Nachteil, dass bei gekrümmten Untergrundverläufen eine manuelle Auswertung erforderlich wird.

Die Veröffentlichung "A New Baseline Correction Algorighm Using Objective Criteria" von Juwhan Liu und Jack. L. Koenig in Applied Spectroscopy, (1987) Bd.41, Seite 447 beschreibt ein Verfahren zur Bestimmung und Korrektur von Untergrund, bei dem eine lineare oder quadratische Kurve an das Spektrum gefittet wird durch Anpassung der kleinsten Fehlerquadrate. Werte, die außerhalb einer Standardabweichung von diesem Untergrund liegen, werden nicht berücksichtigt.

Die Veröffentlichung "Background Subtract Subroutine for Spectral Data" von R.P.Goehner in Anal.Chem. Bd.50 (1978), Seite 1223 offenbart ebenfalls ein Verfahren, bei dem eine Fitfunktion an das Spektrum oder dessen Teilbereiche angepasst wird.

**Offenbarung der Erfindung**

Es ist Aufgabe der Erfindung, ein Verfahren zur Korrektur von breitbandigem Untergrund zu schaffen.

Erfindungsgemäß wird die Aufgabe gelöst durch das Kennzeichen des Anspruchs 1. Die Untergrundkorrektur umfasst in einer Ausgestaltung der Erfindung folgende Schritte:

(a) Glätten einer aufgenommenen optischen Spektralkurve mittels Moving Average, wobei die Breite des Moving Average etwa das Doppelte einer spektralen Linienbreite einer Referenzlinie beträgt,

(b) Bestimmen aller Werte der ursprünglichen Kurve, deren Wert über dem Wert der geglätteten Kurve liegt und Erzeugen einer Untergrundkurve durch Ersetzen dieser Werte durch den jeweiligen Wert der geglätteten Kurve,

(c) wenigstens zweifaches Wiederholen der Schritte (a) bis (b), wobei bei den Wiederholungen in Schritt (a) jeweils die im vorigen Schritt (b) erhaltene Untergrundkurve geglättet wird und in Schritt (b) als ursprüngliche Kurve genommen wird,

(d) Subtraktion der auf diese Weise in den Schritten (a) bis (c) erhaltenen Untergrundkurve von der ursprünglich aufgenommenen Spektralkurve.

Bei der geglätteten Kurve sind die Peaks üblicherweise flacher und breiter. Wenn die Werte, die über der geglätteten Kurve liegen, auf den Wert der geglätteten Kurve gesetzt werden und dieser Vorgang mehrfach wiederholt wird, verschwinden die Peaks nach einiger Zeit und übrig bleibt lediglich der breitbandige Untergrund, der dann von der ursprünglichen Kurve subtrahiert werden kann. Der breitbandige Untergrund kann von nichtaufgelösten Rotations-Schwingungs-Banden von Molekülen, durch Streulicht oder sonstigen quasi-kontinuierlichen und kontinuierlichen Strahlungsquellen herrühren. Die Höhe und Breite der Peaks, die diesem Untergrund überlagert sind, wird durch diese Art der Korrektur nicht beeinflusst.

Das Glätten der Kurve erfolgt bevorzugt mittels moving average. Dies ist ein Verfahren, bei dem jeder Intensitätswert I an einer Stelle x des Spektrums durch den Mittelwert $I_{mittel}$ ersetzt wird. Der Mittelwert $I_{mittel}$ wird aus den Intensitätswerten an der Stelle x und den umgebenden Stellen $x \pm 1$, $x \pm 2$, $x \pm 3$ etc. gebildet. Dadurch wird im allgemeinen hochfrequentes Rauschen geglättet und die Peaks in einer Kurve flacher und breiter. In einer Ausgestaltung des Verfahrens beträgt die Breite des moving average das Doppelte einer durchschnittlichen Linienbreite einer Referenzlinie.

Ausgestaltungen der Erfindung ergeben sich aus den Unteransprüchen. Ausführungsbeispiele sind nachstehend unter Bezugnahme auf die beigefügten Zeichnungen näher erläutert.

**Kurze Beschreibung der Zeichnungen**

Fig.1        zeigt schematisch den Aufbau eines Echellespektrometers mit einem Prisma in Littrow-Anordnung

Fig.2        zeigt eine Seitenansicht eines Echelle-Gitters

Fig.3        ist eine Draufsicht auf den Strahlengang in dem Echellespektrometer aus Fig.1

Fig.4        zeigt schematisch die Ordnungen eines kontinuierlichen Spektrums auf einem Flächendetektor

Fig.5        ist eine Detaildarstellung des Gitteraufbaus

Fig.6        ist eine Detaildarstellung des Aufbaus des Prismas mit Kompensator

Fig.7        ist eine Detaildarstellung des Aufbaus des Kameraspiegels in Seitenansicht

Fig.8        ist eine Detaildarstellung des Aufbaus des Kameraspiegels in Vorderansicht

Fig.9        ist eine Detaildarstellung des Detektoraufbaus in Vorderansicht

Fig.10       ist eine Darstellung der Lage der Linien bei veränderlicher Temperatur bei Stabilisierung einer Linie

Fig.11       ist eine Darstellung der Lage der Linien bei veränderter Temperatur bei Stabilisierung aller Stellgrößen

Fig.12       zeigt die gekrümmten Ordnungen eines kontinuierlichen Spektrums und eine ausgewählte Spalte

Fig.13       zeigt den Intensitätsverlauf entlang der ausgewählten Spalte in Fig.12

Fig.14       zeigt die Fitfunktionen für die Minima zwischen den Ordnungen

Fig.15       zeigt das Echelle-Spektrum eines Linienstrahlers

Fig.16(a)-(e)    zeigt die Intensität entlang einer Ordnung und zunehmend geglättete Funktionen mit denen eine Untergrundkorrektur durchgeführt wird.

Fig.17a    zeigt die Intensität entlang einer Ordnung und den berechneten Untergrund

Fig.17b    zeigt die Untergrund-korrigierte Intensität entlang einer Ordnung

Fig.18    zeigt ein Echelle-Spektrometer nach einem anderen Ausführungsbeispiel

## Beschreibung der Ausführungsbeispiele

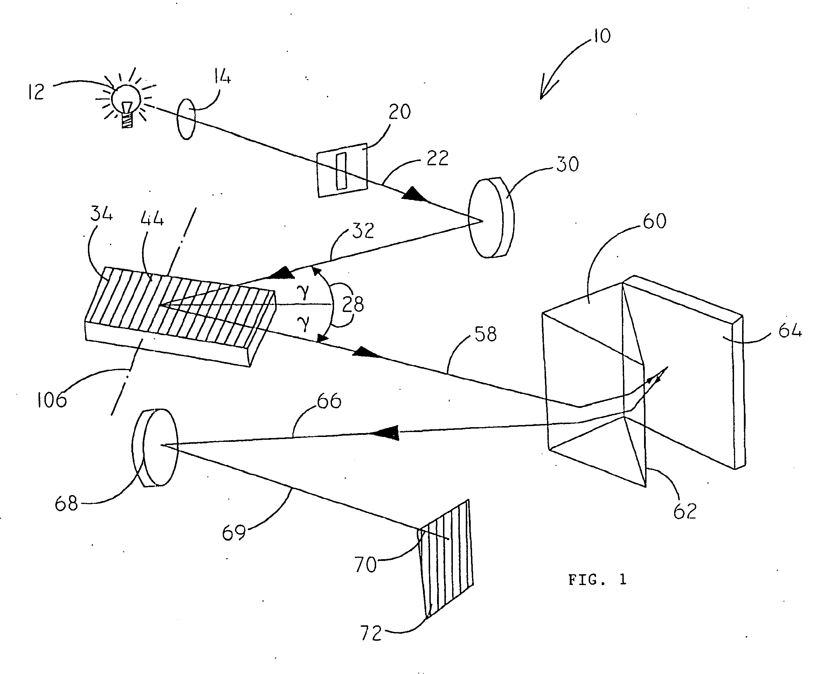

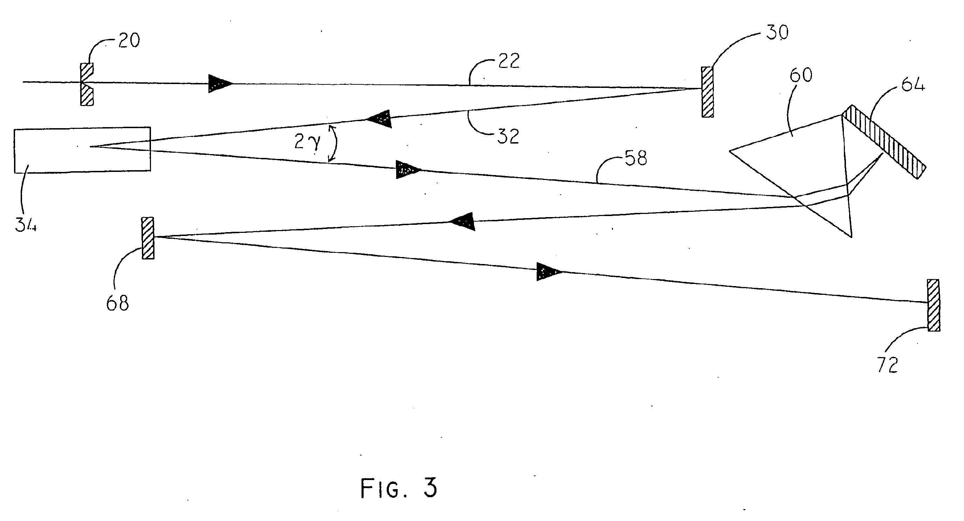

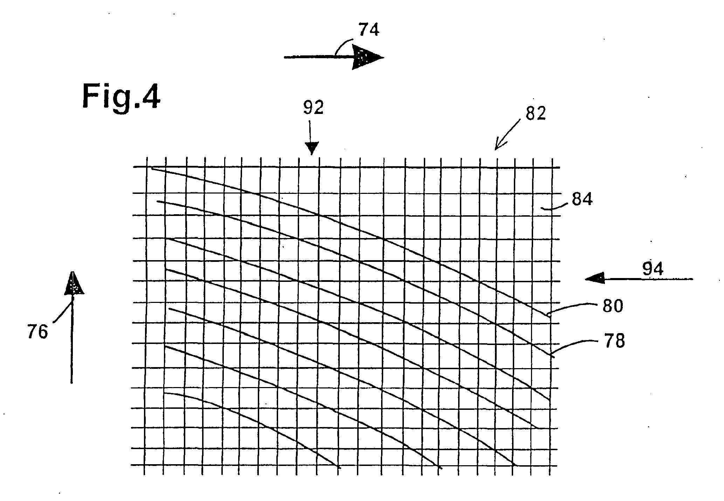

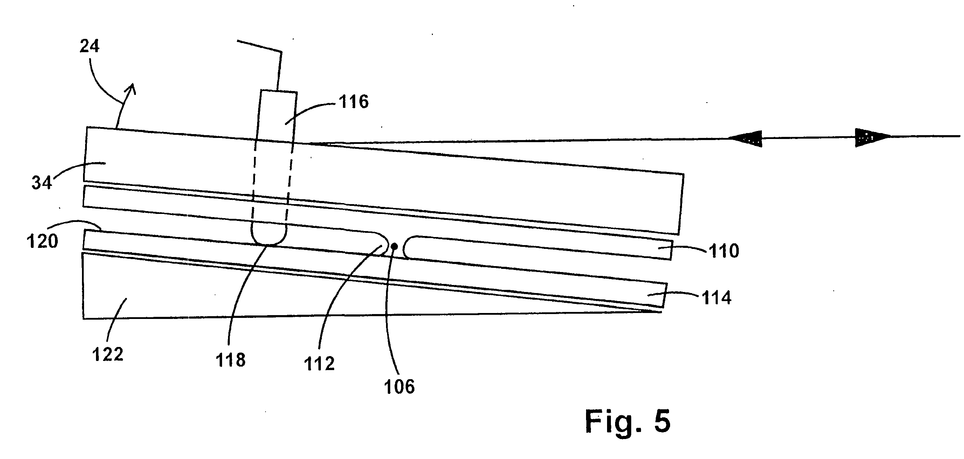

In Fig.1 ist ein erfindungsgemäßes Echelle-Spektrometer 10 schematisch dargestellt. Das Licht einer Lichtquelle 12 wird mittels einer Linse 14 oder eines Spiegels auf einen Eintrittsspalt 20 fokussiert. Die optische Achse wird durch eine Linie 22 in Fig.1 dargestellt. Das Licht tritt durch den Eintrittsspalt 20 und wird mittels eines sphärischen Konkav-Spiegels 30 parallelisiert. Das parallele Bündel 32 trifft anschließend auf ein Echelle-Gitter 34, wo es dispergiert wird. Die Gitterfurchen 44 verlaufen horizontal. Die Dispersion erfolgt senkrecht zu den Gitterfurchen, d.h. vertikal in Fig.1.

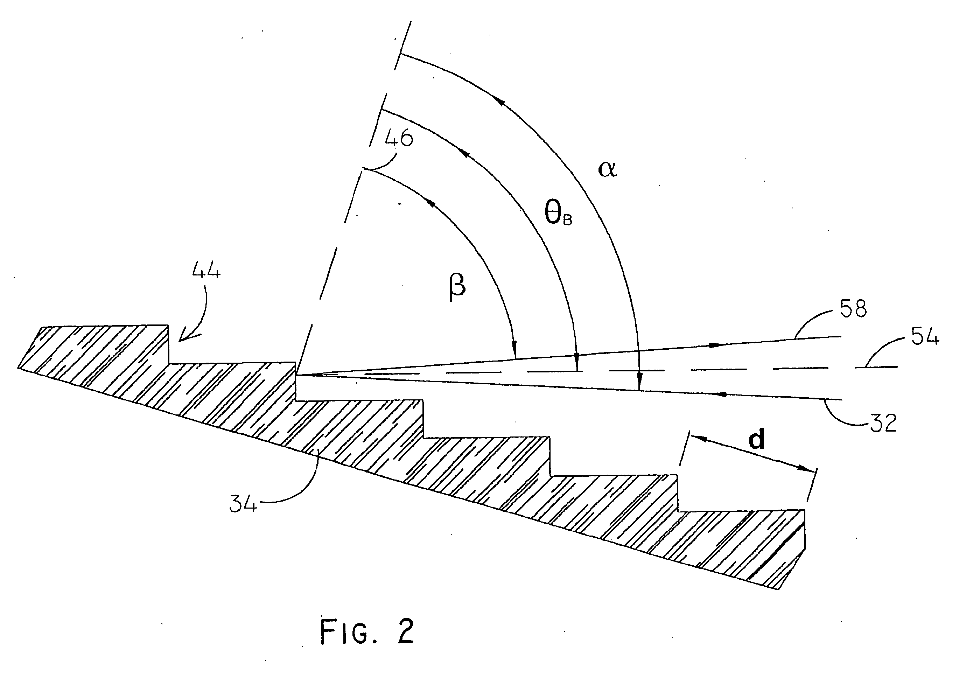

In Fig.2 ist das Echelle-Gitter 34 nochmals im Detail dargestellt. Der Abstand der Gitterfurchen ist mit d bezeichnet. Der Winkel des einfallendes Strahls 32 mit der Senkrechten 46 auf das Gitter ist mit $\alpha$ bezeichnet. Der Winkel des gebeugten Strahls 58 mit der Senkrechten 46 auf das Gitter ist mit $\beta$ bezeichnet. $\theta_B$ bezeichnet den BlazeWinkel der Furchen 44 des Echelle-Gitters 34.
Das parallele Lichtbündel 32 in Fig.1 fällt bezogen auf die Dispersionsebene unter einem sehr flachen Winkel auf das Echelle-Gitter 34. Der Winkel entspricht annähernd 90 Grad minus dem Blazewinkel des Echelle-Gitters.
Durch einen hohen Blazewinkel wird die Intensität des Beugungsbildes auf hohe Beugungsordnungen in einem typischen Bereich zwischen dreißigster und hundertdreißigster Ordnung für die zu messenden Wellenlängen konzentriert. Eine hohe Beugungsordnung bewirkt eine hohe Dispersion. Desgleichen bewirkt ein großer Beugungswinkel, der im vorliegenden Fall 76 Grad beträgt, eine hohe Dispersion. Das Echelle-Gitter 34 hat eine geringe Strichzahl von 75 Strichen pro Millimeter, um für Wellenlängen im Bereich von 190 nm bis 852 nm eine möglichst hohe Winkeldispersion zu erreichen. Typischerweise werden Strichzahlen von 25 bis 250 Striche pro Millimeter verwendet. Durch den großen Einfallswinkel muß das Gitter 34 entsprechend lang sein, wenn die gesamte Strahlung auf das Gitter auftreffen soll.
Das parallele Bündel 32 fällt bezogen auf eine Ebene senkrecht zu den Gitterfurchen unter einem Winkel 28, dem sogenannten off-plane Winkel, auf das Gitter 34. Dieser ist in Fig.3 nochmal deutlicher dargestellt. Dort wird das Bündel in der Ebene parallel zu den Gitterfurchen 44 reflektiert und in der dazu senkrechten Dispersionsebene gebeugt.
Der reflektierte und dispergierte Strahl 58 wird durch ein Prisma 60 mit Dachkante 62 gelenkt. In Fig. 1 und drei verläuft die Dachkante 62 des Prismas 60 senkrecht. Der Strahl 58 wird in dem Prisma 60 dispergiert, trifft dahinter auf einen Planspiegel 64 und wird zurück in das Prisma 60 reflektiert. Dort wird der Strahl erneut dispergiert. Entsprechend der senkrechten Dachkante 62 des Prismas 60 wird der Strahl zweifach in horizontaler Richtung, also senkrecht zur Gitterdispersionsrichtung (Hauptdispersionsrichtung) dispergiert (Querdispersion). Die in Hauptdispersionsrichtung überlappenden Ordnungen werden durch die im Vergleich zur Hauptdispersion erheblich geringere Querdispersion am Prisma 60 in einer Richtung senkrecht zur Hauptdispersionsrichtung auseinandergezogen und gekrümmt.
Nach der Fokussierung der für jeweils genau eine Wellenlänge parallelen Bündel 66 mittels eines weiteren sphärischen Konkav-Spiegels 68 erhält man somit einen fokussierten Strahl 69. Es entsteht ein zweidimensionales Spektrum 70 in der Austrittsebene 72.
Ein typisches Spektrum eines kontinuierlichen Strahlers ist schematisch in Fig. 4 dargestellt. Die Wellenlängen verteilen sich in Hauptdispersionsrichtung in Richtung des Pfeils 74. Die verschiedenen Ordnungen werden in Querdispersionsrichtung, dargestellt durch Pfeil 76, auseinandergezogen. So liegt die 99.Ordnung 78, z.B. neben der 100.Ordnung, die mit 80 bezeichnet ist.
Ein Charged-Coupled-Device (CCD)-Detektor 82 üblicher Bauart ist in der Austrittsebene angeordnet. Der CCD-Detektor ist mit Bildelementen 84 versehen, welche in einem rechtwinkligen Raster in horizontalen Detektorzeilen 94 und vertikalen Detektorspalten 92 angeordnet sind. Der Detektor ist so ausgerichtet, daß die Detektorzeilen 94 im wesentlichen entlang den Beugungsordnungen des Echelle-Gitters 34 verlaufen. Durch die Prismendispersion sind die Beugungsordnungen 78, 80 jedoch leicht gekrümmt, nicht parallel und nicht äquidistant. In Fig.4 ist dies zur besseren Veranschaulichung etwas übertrieben dargestellt.
Jedem Bildelement kann ein Paar (x, y) zugeordnet werden, das seine Lage eindeutig beschreibt. Der x-Wert entspricht der x-ten Detektorspalte von links aus gesehen und der y-Wert entspricht der y-ten Detektorzeile von unten aus gezählt.
Das Gitter 34 ist um eine Achse 106 beweglich, die parallel zu den Gitterfurchen 44 verläuft. Die Achse 106 verläuft entlang einer Biegestelle 112 (s. Fig.5). Die Biegestelle 112 verbindet eine obere Metallplatte 110 mit einer unteren Metallplatte 114. Das Gitter 34 liegt auf der oberen Metallplatte 110 auf und ist auf ihr aufgeklebt. Die untere Metallplatte 114 liegt auf einem Keil 122 auf, dessen Winkel im wesentlichen 90 Grad minus dem Blazewinkel des Gitters entspricht. Ein Piezoelement 116 ragt seitlich vom Gitter durch die obere Metallplatte 110 und übt mit seinem Ende einen Druck auf die untere Metallplatte 114 aus.

Wenn die Spannung an dem Piezoelement 116 erhöht wird, dehnt es sich aus und der Druck auf die untere Metallplatte 114 wird erhöht. Dadurch wird das Gitter weiter in Richtung des Pfeils 124 verkippt. Bei Verringerung der Spannung erfolgt dementsprechend eine Drehung des Gitters in entgegengesetzter Richtung.

In einem nicht dargestellten Ausführungsbeispiel erfolgt die Drehung mittels eines rechnergesteuerten Schrittmotors und einer damit verbundenen Feinspindel. Mit der Drehung des Gitters 34 erfolgt die Verschiebung einer Linie einer ausgewählten Wellenlänge im wesentlichen in Richtung der Hauptdispersion in der Austrittsebene, also in Richtung des Pfeils 74 in Fig.4 beziehungsweise in der dazu entgegengesetzten Richtung.

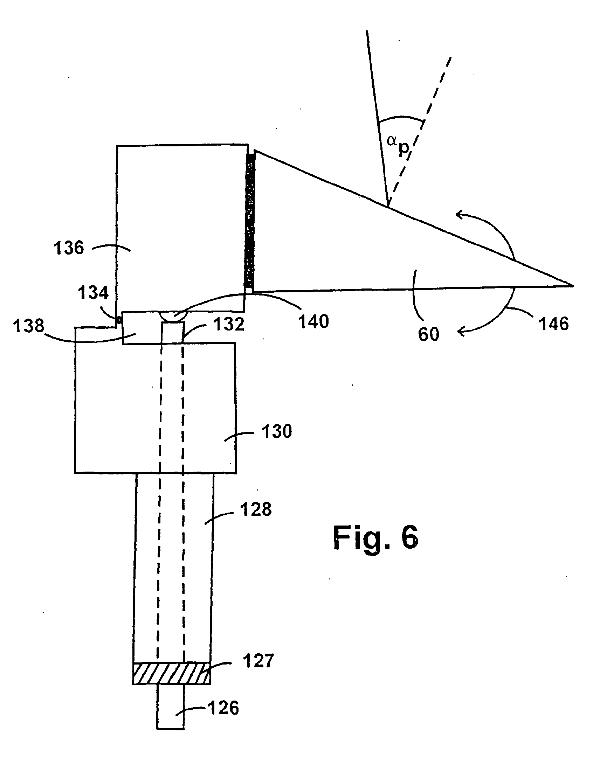

In Fig.6 ist die Prismenanordnung dargestellt. Ein Messingstab 126 ist an dem Befestigungspunkt 127 mit einem Invargehäuse 128 verbunden. Das Invargehäuse 128 ist an einem Metallgehäuse 130 befestigt. Der Messingstab 126 erstreckt sich durch das Metallgehäuse 130 und ragt mit seinem freien Ende 132 darüber hinaus. Das mit dem mechanischen Aufbau des Spektrometers fest verbundene Metallgehäuse 130 ist über eine Biegestelle 134 mit einem Metallblock 136 verbunden. An dem Metallblock ist das Prisma 60 angeklebt. Wenn sich die Umgebungstemperatur erhöht erhöht, sich die Prismendispersion. Bei einer Temperaturerhöhung dehnt sich aber auch der Messingstab 126 aus. Das Invargehäuse 128 dehnt sich aufgrund der Eigenschaften von Invar nicht oder nur vernachlässigbar aus. Durch die Ausdehnung des Messingstabs wird ein Druck auf einen Druckpunkt 140 an der Oberfläche des Metallblocks 136 ausgeübt. Der Abstand 138 des Metallgehäuses 130 vom Metallblock 136 verändert sich dann an dieser Stelle derart, daß eine Drehung des Metallblocks 136 um die Biegestelle erfolgt. Dabei bildet die Biegestelle 134 die Drehachse. Durch die Drehung des Metallblocks 136 wird auch das daran befestigte Prisma 60 gedreht und zwar in der Art, daß sich der Einfallswinkel $\alpha_p$, und damit die Dispersion verringert. Bei geeigneten Abmessungen der Komponenten der Anordnung kann die Dispersionsverringerung durch die Drehung gerade so gestaltet werden, daß sie die Dispersionserhöhung durch die Erhöhung der mit der Umgebungstemperatur gekoppelten Prismentemperatur gerade kompensiert.

In einem nicht dargestellten alternativen Ausführungsbeispiel ist das Prisma 60 um eine Achse parallel zur Dachkante 62 drehbar. Auch diese Drehung kann Schrittmotor-oder Piezo-gesteuert erfolgen. Das Prisma 60 wird dazu auf einem drehbaren Tisch befestigt. Durch eine Drehung des Prismas 60 wird neben der Änderung der Querdispersion die Verschiebung aller Ordnungen in Richtung des Pfeils 76 (Fig.3) beziehungsweise in der dazu entgegengesetzten Richtung bewirkt.

Am Kameraspiegel 68 sind zwei Piezokristalle vorgesehen, die über einen Computer und eine Spannungsversorgung angesteuert werden. Die Piezos sind derart am Kameraspiegel angebracht, daß dieser um zwei Achsen mittels der Piezos gedreht werden kann. Dadurch kann das gesamte Spektrum in der Austrittsebene ohne wesentliche Verzerrung in vertikaler und horizontaler Richtung verschoben werden.

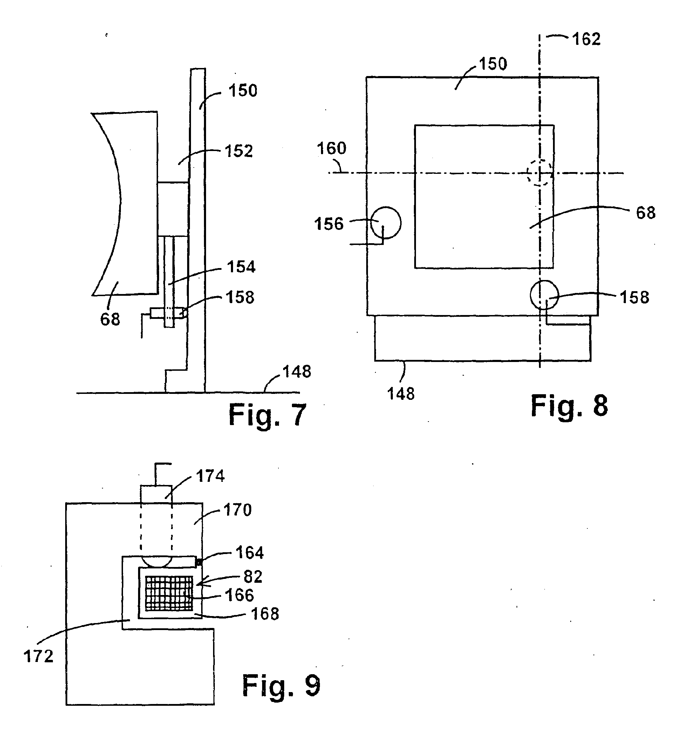

In Fig.7 und Fig.8 ist der Aufbau des Kameraspiegels 68 im Detail dargestellt. Auf der Grundplatte 148 des Spektrometers ist eine senkrechte Platte 150 angeschraubt. Der Kameraspiegel 68 ist mit seiner Rückseite beweglich an dieser Platte 150 angebracht, wobei zwischen der Rückseite des Kameraspiegels 68 und der Platte 150 ein Zwischenraum 152 vorgesehen ist. Eine weitere Platte 154 sitzt in diesem Zwischenraum 152 und ist mit einem in zwei zueinander senkrechten Richtungen beweglichen Gelenkelement mit der Platte 150 verbunden. Durch diese Platte 154 ragen zwei Piezoelemente 156 und 158. Die Piezoelemente 156 und 158 sind mit der Platte 154 fest verbunden. Wenn sich eines der Piezoelemente oder beide ausdehnen, wird ein Druck auf einen Druckpunkt auf der Oberfläche der senkrechten Platte 150 ausgeübt und die Platte 154 verkippt. Die Platte 154 liegt an der Rückseite des Spiegels 68 an. Es wird somit auch eine Verkippung des Spiegels bewirkt. Die Verkippung erfolgt im wesentlichen um eine horizontale Achse 160 (s.Fig. 8), wenn der Druck durch das Piezoelement 158 erfolgt und im wesentlichen um eine vertikale Achse 162, wenn der Druck durch das Piezoelement 156 erfolgt.

Der Flächendetektor 82 in der Austrittsebene 72 des Spektrometers ist ebenfalls drehbar gelagert. Dies ist in Fig. 9 dargestellt. Die Drehachse 164 steht senkrecht auf der Detektoroberfläche 166. Durch geeignete Anordnung eines weiteren Piezokristalls, der ebenfalls computergesteuert mit einer Spannung versorgt wird, kann der Detektor 82 um einen definierten Winkel gedreht werden.

Hierzu ist der Detektor 82 auf einem inneren Metallblock 168 angeordnet, der über eine Biegestelle, der mit der Drehachse 164 zusammenfällt, mit einem äußeren Metallblock 170 verbunden ist. Der äußere Metallblock 170 ist fest mit der Spektrometergrundplatte verbunden. Der äußere Metallblock 170 erstreckt sich auf drei Seiten um den inneren Metallblock herum, wobei zwischen den Blöcken ein Zwischenraum 172 gebildet wird. Durch den äußeren Metallblock 170 ragt ein Piezoelement 174, welches sich über den Zwischenraum 172 erstreckt und auf den inneren Metallblock 168 drückt. Der Druckpunkt zwischen Piezoelement 174 und innerem Metallblock 168 liegt in einem Abstand von der Biegestelle 164. Wenn sich das Piezoelement aufgrund einer Spannungsänderung ausdehnt/zusammenzieht, dann wird der innere Metallblock 168 mit dem darauf befindlichen Detektor um die Achse 164 gedreht.

Das Gerät unterliegt bei Temperatur- oder Druckschwankungen oder sonstigen Veränderungen der Geräte-Umgebung einer Drift, das heißt einer mechanischen Verschiebung bzw. Verdrehung aller optischen Bauelemente aus ihren Sollpositionen. Durch diese Drift werden die Spektrallinien am Detektor ggf. verschoben, verzerrt oder gedreht. Dabei kann sich auch der Abstand zwischen zwei Spektrallinien ändern.

Zur Ermittlung des Intensitätsverlaufs der Strahlung aus einer Lichtquelle 12 in Abhängigkeit von der Wellenlänge (Spektrum) wird das Gerät zunächst justiert. Dazu werden der Ordnungsverlauf und die Lage der Ordnungen mit einer Referenz verglichen.

Um die Spektrallinien im gesamten Spektralbereich mit einer Abweichung von weniger als einer Pixelbreite auf einer definierten Referenzposition zu halten, müssen die Stellelemente an Gitter, Prisma, Kameraspiegel und Detektor entsprechend regelmäßig nachjustiert werden. Bei einem klimatisierten Labor reicht im allgemeinen eine Justierung am Tag, während bei Anordnungen zum Beispiel draußen im mobilen Einsatz praktisch vor jeder Messung eine Justierung vorgenommen werden muß.

Es werden jeweils die Stellelemente bewegt, die den größten Effekt auf das Spektrum haben, unabhängig von der Ursache der ursprünglichen Verschiebung aus der Referenzlage. Die Ursache der Verschiebung ist oft auch nicht mehr feststellbar. Wenn sich zum Beispiel der Detektor aus seiner Lage linear verschoben hat, so wird trotzdem eine Justierung mittels der Piezoelemente am Kameraspiegel vorgenommen.

Bei der Geräteeinrichtung werden zunächst alle optischen Komponenten, d.h. Gitter, Kameraspiegel und Detektor in eine mittige Position gebracht. Dann wird eine

Referenzlichtquelle, die über weite Bereiche des Spektrums Linienstrahlung emittiert, vor dem Eintrittsspalt des Spektrometers eingekoppelt und so justiert, daß auf dem Detektor scharfe Linien erscheinen. Als Referenzlichtquelle eignet sich zum Beispiel eine Edelgas-Pen-Ray-Lampe.

Die Lage der Spektrallinien in diesem Zustand wird dann als Referenzlage gespeichert. Dies geschieht in Form von x- und y-Werten zur Beschreibung des Detektorbildelements und der zugehörigen Intensität in relativen Einheiten. Es werden dann für jedes Stellelement und für jede Referenzlinie Stellgrößen-Kombinationen ermittelt, mit denen das Referenzspektrum erhalten wird. Die Stellgrößen-Kombinationen müssen experimentell ermittelt werden, da hier Herstellungstoleranzen, Abweichungen der Lage der Achsen von einem Gerät zum anderen und sonstige Unterschiede zwischen den korrespondierenden Komponenten verschiedener Spektrometer zu unterschiedlichen Stellgrößen-Kombinationen führen. Ist diese einmal ermittelt, so kann sie solange verwendet werden, wie die gleichen Bauteile verwendet werden.

Die Stellgrößen sind voneinander abhängig. Ist zum Beispiel der Abstand zweier Spektrallinien in einer Ordnung im Vergleich zu dem Abstand zwischen den gleichen Linien im Referenzspektrum zu groß, so kann dies nicht einfach mit einer Drehung des Gitters kompensiert werden. Eine Drehung des Gitters ist nämlich mit einer Verschiebung beider Linien verbunden, die dann widerum mit einer Kippung oder Drehung des Kameraspieges kompensiert werden muß. Eine solche Drehung kann auch eine Drehung des gesamten Spektrums in der Austrittsebene bewirken. Diese wird dann durch Drehung des Detektors kompensiert.

Es existiert aber für jedes Spektrum ein Satz von Werten für die Stellgrößen, mit dem das Spektrum in die Referenzlage geschoben werden kann. Diese Zuordnung von Spektrallinienpositionen zu einem Satz von Werten für die Stellgrößen wird fest für jedes Spektrometer gespeichert und zur Justage verwendet. Die Stellgrößen sind im vorliegenden Fall: "Gitterwinkel", "horizontale Lage des Gesamtspektrums", "vertikale Lage des Gesamtspektrums" und "Detektorwinkel". Die Spektrallinienpositionen werden gekennzeichnet durch die Werte für x- und y-Position, Wellenlänge, Halbwertsbreite und Intensität der Spektralline. X und Y bezeichnen die Lage eines Bildelementes.

Zur Justage wird die Lage der Spektrallinien der Referenzlichtquelle bestimmt und mit dem gespeicherten Referenzspektrum verglichen. Danach werden die Stellelemente entsprechend der gespeicherten Zuordnung betätigt. In einem weiteren Schritt wird dann erneut die Lage der Spektrallinien geprüft. Liegen die Spektrallinien innerhalb eines vorgegebenen Intervalls um die Referenzlage, so befindet sich das Spektrometer im "Referenzzustand". Die Zuordnung ist aber möglicherweise nicht perfekt. Dies kann an Nichtlinearitäten liegen, oder daran, daß sich die Drehachsen nicht in ihrer optimalen Lage befinden. Dann liegen die Spektrallinien zwar näher an ihrer Referenzposition, aber nicht direkt darauf. Der Justiervorgang wird daher wiederholt, bis sich alle Spektrallinien an ihren Referenzpositionen befinden. Je nach Qualität der Zuordnungsvorschrift und der Stellelemente ist nur eine oder aber auch bis zu 100 Wiederholungen nötig. Danach befinden sich alle Spektrallinien in ihren Referenzpositionen. Das Spektrometer hat dann eine sehr genau definierbare Auflösung. Die Anordnung ist durch Rechnersteuerung auch zur "online"-Stabilisierung geeignet. Dabei wird in regelmäßigen kurzen Abständen eine Justierung vorgenommen.

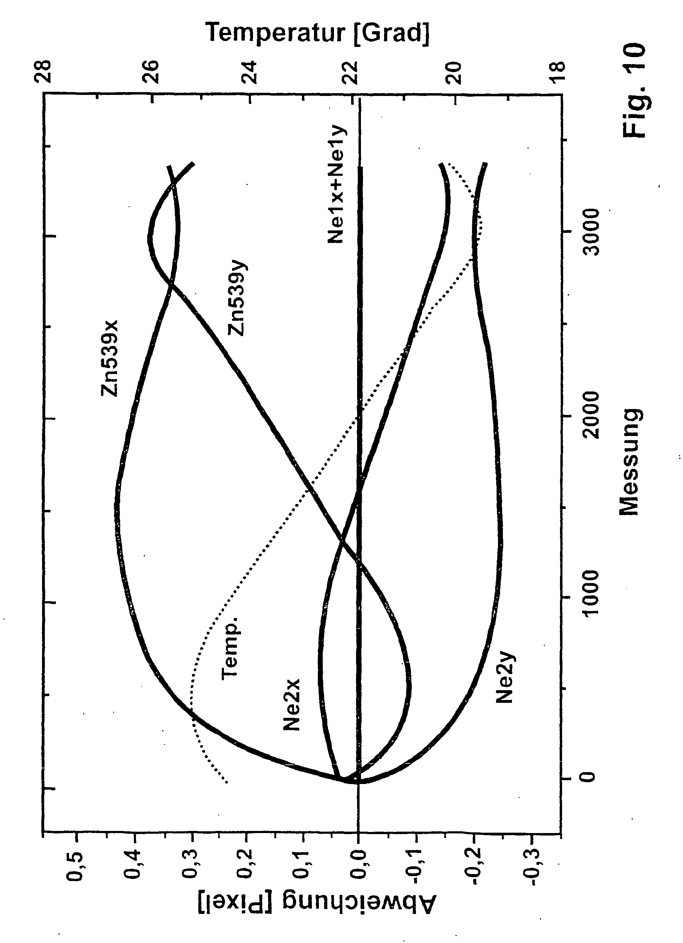

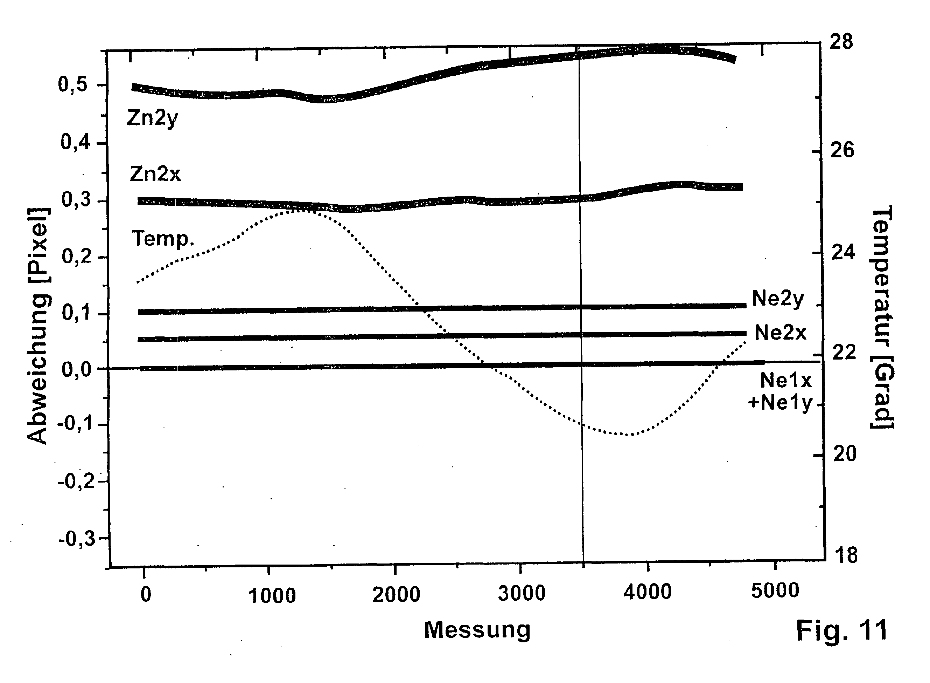

In Fig.10 und Fig.11 ist die Lageverschiebung verschiedener Spektrallinien bei veränderlicher Temperatur dargestellt. Es sind drei Spektrallinien dargestellt, von denen zwei (Ne1, Ne2) in zwei benachbarten Ordnungen jeweils am Ordnungsende liegen, während die dritte (Zn2) in einer dritten Ordnung in der Ordnungsmitte liegt. In Fig. 10 wurde nur die erste Neonlinie, die mit Ne1 bezeichnet ist, stabilisiert, d.h. es wurde nur die Translation des Spektrums über die beiden Piezoelemente am Kameraspiegel kompensiert. In Fig.11 ist die gesamte Stabilisierung aktiv, d. h. zusätzlich die Piezoelemente am Gitter und am Detektor und der passive Prismenkompensator. Man erkennt deutlich, daß die Linien erheblich weniger driften als ohne Stabilisierung. Die Nullpositionen für Ne2x, Ne2y, Zn2x und Zn2y sind zur besseren Übersicht jeweils parallelverschoben dargestellt.

Um ein möglichst gutes Signal-Untergrund-Verhältnis im Spektrum zu erhalten werden die Intensitäten derjenigen Detektorelemente, die mit Licht der gleichen Wellenlänge bestrahlt werden, aufaddiert (Binning). Dazu werden zunächst die zusammengehörigen Detektorelemente bestimmt. Diese "Binningbereiche" verlaufen jeweils etwa senkrecht zu den Ordnungen, die aufgrund der Prismendispersion gekrümmt sind.

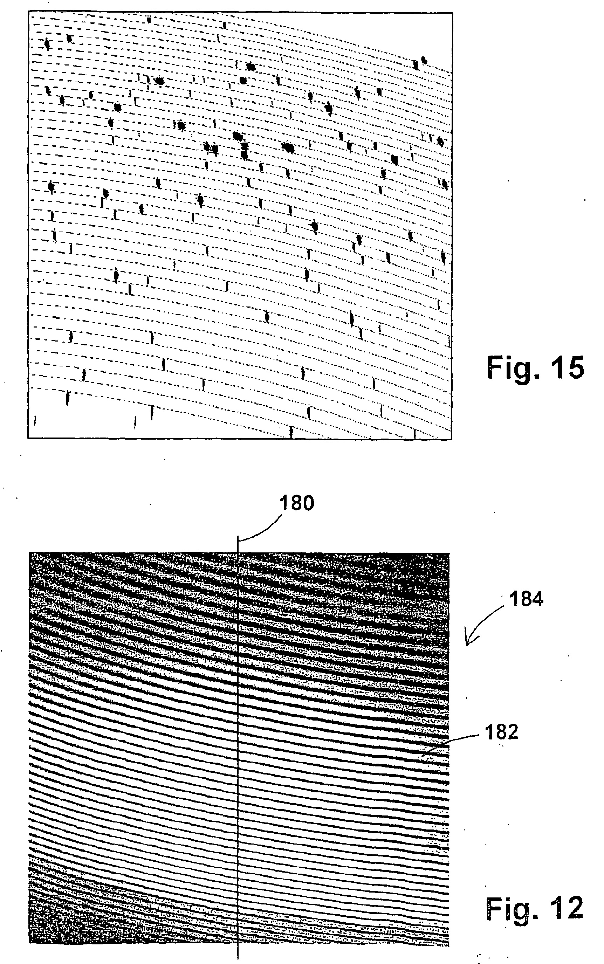

Zunächst wird eine Detektorspalte 180 etwa in der Mitte des Detektors 184 ausgewählt, die im wesentlichen quer zu den Ordnungen 182 verläuft (Fig.12). Wenn die Ordnungen im wesentlichen entlang der Spalten verlaufen, wird eine Detektorzeile ausgewählt. Das Licht eines Kontinuum-Strahlers, welcher ein kontinuierliches Spektrum über den gesamten betrachteten Bereich ausstrahlt, wird in das Spektrometer eingekoppelt und die Intensitäten I auf den Detektorelementen der Detektorspalte 180 ermittelt. Der Intensitätsverlauf in Abhängigkeit vom y-Wert entlang der Detektorspalte ist in Fig.3 dargestellt.

Die Ordnungsmitten liegen in etwa an den Maxima 184, die Minima 186 stellen die Mitten zwischen den Ordnungen dar. Um die Binning-Bereiche zu ermitteln, muß zunächst der genaue Ordnungsverlauf jeder interessierenden Ordnung ermittelt werden. Dies kann durch Beschreibung der Minima zwischen den Ordnungen oder durch Beschreibung der Maxima erfolgen. Die Minima sind im vorliegenden Fall schärfer ausgeprägt als die Maxima und werden daher ausgewählt. Bei großer Ordnungstrennung sind die Maxima besser geeignet.

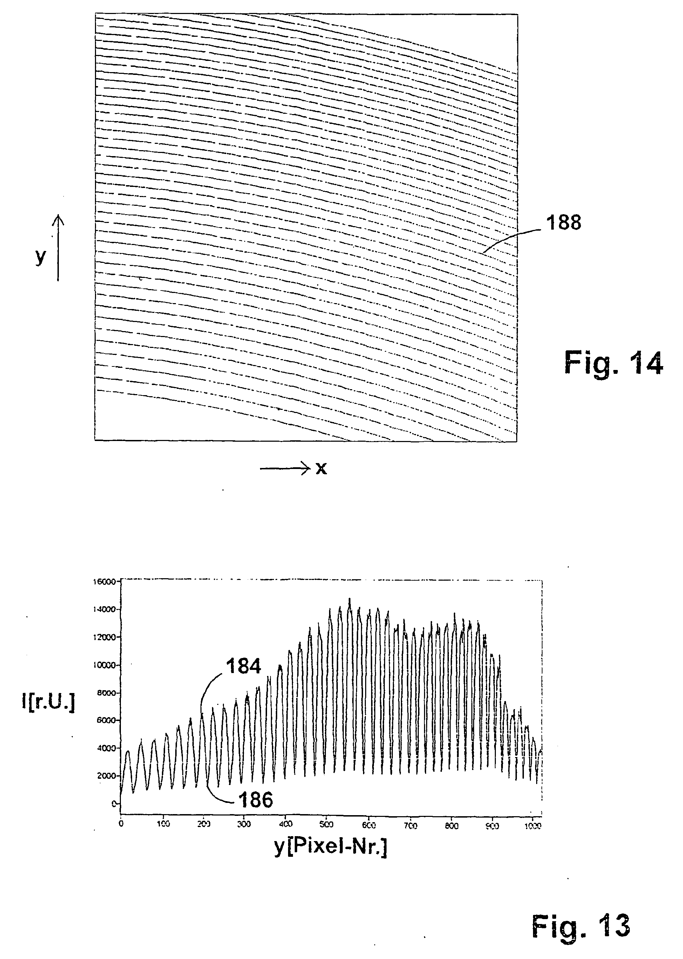

Als nächster Schritt werden die Detektorelemente bestimmt, auf denen die Intensität lokale Minima aufweist. Diese stellen die Mitten zwischen den Ordnungen dar. In Fig.13 sind das die y-Werte bei y=32, 66, 98...1010. Diese Werte stellen zusammen mit dem x-Wert der Detektorspalte die Startwerte für die verschiedenen Ordnungen dar.

Als nächstes muß der Verlauf des Minimums entlang der Ordnung verfolgt und beschrieben werden. Hierzu wird ausgehend von einem lokalen Minimum $(x_{s,ym, min})$ als Startwert das nächste Detektorelement $(x_s+1, y_m)$ entlang der jeweiligen Ordnung sowie ein Detektorelement darüber und darunter $(x_s+1, y_m \pm 1)$ ausgewählt. Das Bildelement dieser drei Bildelemente mit der geringsten Intensität wird als Minimum zwischen den zwei betrachteten Ordnungen für diese benachbarte Detektorspalte angenommen. Es dient wiederum als Ausgangswert für die Auswahl der nächsten drei benachbarten Bildelemente aus denen wiederum dasjenige mit der geringsten Intensität ausgewählt wird. Der Vorgang wird auf beiden Seiten der ursprünglichen Spalte für jede Ordnung wiederholt, bis für jede Spalte alle Minima bestimmt sind. Die Gesamtheit aller ausgewählten Bildelemente verläuft dann entlang des Minimums zwischen zwei Ordnungen. Drei Pixel sind für die Bestimmung der Minima ausreichend, da keine Sprünge im Verlauf der Ordnungen vorkommen.

Der Verlauf des Minimums zwischen zwei Ordnungen wird dann mittels einer FitFunktion, z.B. einem Polynom zweiter oder dritter Ordnung, das durch die ausgewählten Minima verläuft, beschrieben. Dadurch erreicht man die Kompensation von Digitalisierungseffekten, die daher kommen, daß die Ortsverteilung des Minimums in Sprüngen verläuft. Der Grad des Polynoms hängt vom Grad der Kürmmung ab und beträgt 2 oder 3. Bei dem beschriebenen Spektrum ist ein Polynom 2.Grades angemessen. Es lautet dann

$$y_{min}(x) = a_0 + a_1 x + a_2 x^2$$

wobei die Koeffizienten $a_0, a_1$, und $a_2$ die Fit-Parameter darstellen und x die Spaltenzahl. Dieser Vorgang wird für jede Ordnung wiederholt, bis alle Ordnungen durch Polynome mit festen Koeffizienten beschrieben sind. Das Resultat dieser Fit-Prozedur ist in Fig.14 dargestellt. Dort sind die Fit-Funktionen 188 y(x) für alle interessierenden Ordnungen dargestellt.

Die Binning-Bereiche sind dann alle Detektorelemente einer Spalte zwischen je zwei benachbarten gefitteten Funktionen. Die Funktionen können auch nichtganzzahlige Werte annehmen. Dann werden die Funktionen über die Breite eines Detektorelements auf seinen Mittenwert festgelegt. Die Intensität an diesem Detektorelement wird entsprechend beim Binning nur anteilig berücksichtigt. Dadurch wird der Digitalisierungseffekt, der beim Binning gewöhnlich auftritt, kompensiert.

Es ergibt sich eine Funktionenschar, die als solche in Form der Koeffizienten abgespeichert werden kann. Im vorliegenden Fall wurde aber auch die Funktionenschar gefittet durch einen sekundären Fit der Koeffizienten. Hierzu wurden die Koeffizienten dargestellt durch eine Matrix:

$$a_{0,1}, \ a_{0,2} \ldots a_{0,m}$$

$$a_{1,1}, \ a_{1,2} \ldots a_{1,m}$$

$$a_{2,1}, \ a_{2,2}...a_{2,m}$$

und die korrespondierenden Koeffizienten jeder Ordnung, z.B. die konstanten Glieder $a_{0,1}$, $a_{0,2}...a_{0,m}$ erneut durch eine Fitfunktion beschrieben. Es bleiben dann 3 Koeffizienten für jede der sekundären Fitfunktionen übrig. Das heißt, daß die gesamte Funktionenschar mittels 9 Koeffizienten beschrieben wird. Bei der Verwendung eines Polynoms 3.Grades würden 16 Koeffizienten ausreichen. Dadurch wird die Datenmenge zur Beschreibung des Ordnungsverlaufs erheblich reduziert. Außerdem sind die Funktionen $y_m(x)$ zuverlässiger, da Digitalisierungseffekte, Rauschen etc. durch den Fit minimiert wurden.

Bei der Bestimmung der Binning-Bereiche für die tatsächliche Messung werden die Bildelemente anteilig berücksichtigt, jedoch Spaltenweise diskret. Der Binningbereich stellt den Bereich zwischen zwei Minima dar und die Intensitätswerte werden entsprechend aufaddiert. Durch dieses Verfahren erhält man aus einer 2-dimensionalen Intensitätsverteilung $I(x,y)$ eine Schar von eindimensionalen Spektren $I_m(x)$, wobei m die Ordnung bezeichnet.

Um die für die Spektroskopiker interessante Funktion $I(\lambda)$ zu erhalten, muß $I_m(x)$ kalibriert werden. Hierzu muß jeder Position x des gebinnten Spektrums eine Wellenlänge $\lambda$ zugeordnet werden. Gesucht ist also zunächst die Funktion $\lambda_m(x)$.

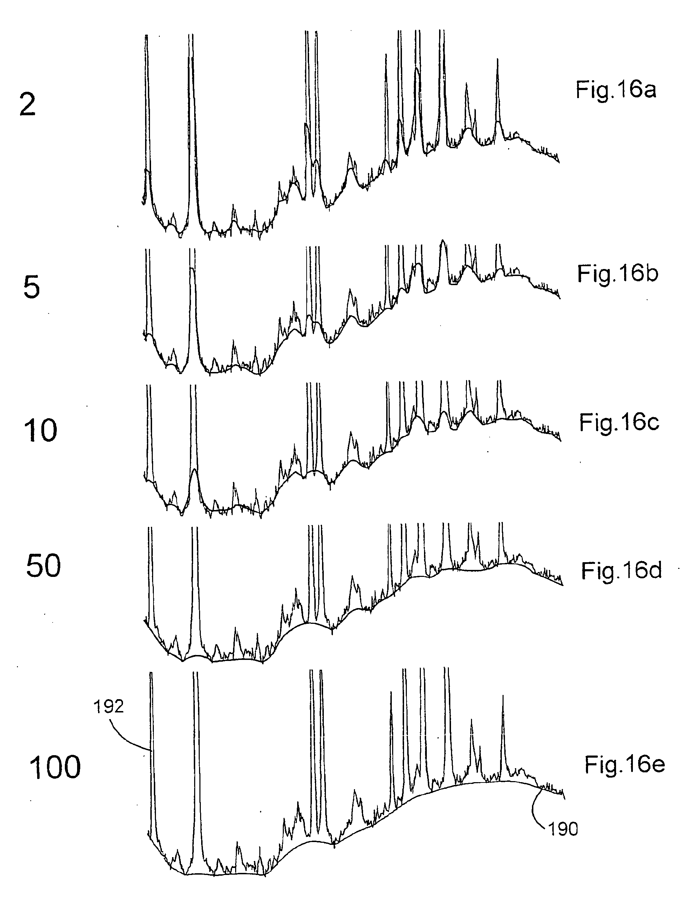

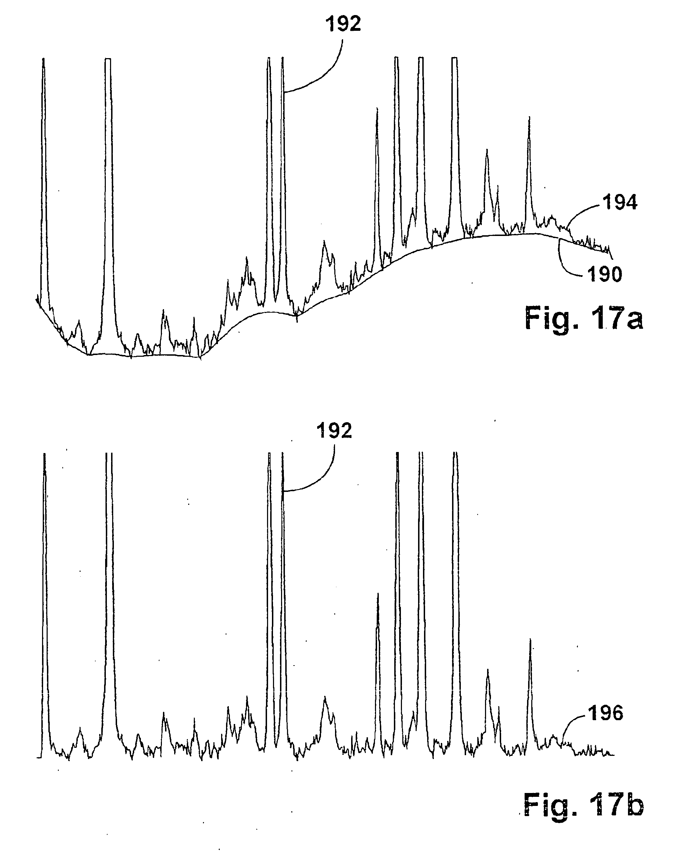

Die Kalibrierung erfolgt durch Vergleich des gemessenen Spektrums mit einem Referenzspektrum, das von einem Linienstrahler mit einer hohen Anzahl an Spektrallinien aufgenommen wurde. Ein Ausschnitt eines solchen Spektrums ist in Fig. 16 und in Fig. 17 dargestellt. Für den UV-Bereich zwischen 200 - 350 nm sind die Platinlinien besonders gut geeignet. Die Liniendaten liegen bereits als Datei (Atlas) vor. In dieser Datei sind die Wellenlängen der Linienschwerpunkte und die relativen Intensitäten gespeichert. Im Bereich zwischen 650 nm - 1000 nm eignen sich die Edelgaslinien einer Pen-Ray-Lampe, bei denen die Spektren mit der Software aufaddiert wurden.

Das aufgenommene Spektrum muß zunächst bezüglich breitbandigem Untergrund korrigiert werden. In Fig. 16e ist der Untergrund mit 190 bezeichnet. Die Spektrallinien sind mit 192 bezeichnet. Der breitbandige Untergrund entsteht zum Beispiel durch Streulicht, nichtaufgelöste Rotations-Schwingungsbanden von Molekülen oder dergleichen.

Zur Untergrundkorrektur gibt es mehrere Verfahren. Üblicherweise wird der Untergrund zunächst bestimmt und dann vom ursprünglichen Spektrum subtrahiert. Zur Bestimmung des Untergrunds wird die Funktion $I_m(x)$ mit moving avarage geglättet. Das heißt, an jedem Punkt x wird die Intentsität $I(x)$ durch den Mittelwert

$$\bar{I}(x) = \frac{\sum_{\nu}^{\nu_{max}} I(x_\nu)}{\nu_{max}}$$

ersetzt. Dabei entspricht die Breite $\nu_{max}$ des moving avarage etwa dem Doppelten einer Linienbreite. Wenn die durchschnittliche Linienbreite etwa 5 Pixel beträgt, so ist $\nu_{max}= 10$. Bei der geglätteten Funktion wird dann jeder Wert, bei dem der Wert der ursprünglichen Kurve über dem Wert der geglätteten Kurve liegt, auf den Wert der geglätteten Kurve gesetzt.

Im nächsten Schritt wird dann die auf diese Weise modifizierte Kurve erneut mit moving avarage geglättet. Auch nach dieser wiederholten Glättung der modifizierten Kurve wird die Kurve erneut modifiziert, indem die Werte, die über dem Wert der geglätteten Kurve liegen, auf den Wert der geglätteten Kurve gesetzt werden. Das Resultat der 2-fachen Glättung ist in Fig.16 a dargestellt. Man erkennt, daß die Peaks schrumpfen, während der Rest der geglätteten Kurve sich gut an die ursprüngliche Kurve anschmiegt.

Der Prozess der Glättung und das Herabsetzen der Werte auf den Peaks wird 100 mal wiederholt. In Fig. 16b bis Fig.16e sind die ursprünglichen Werte und die Kurven mit 5-facher, 10-facher, 50-facher und 100-facher Wiederholung dargestellt. Am Ende spiegelt die geglättete Kurve den Wert der ursprünglichen Kurve ohne Peaks wieder, d.h. sie beschreibt den breitbandigen Untergrund.

In Fig.17 a ist der Untergrund 190 und die ursprüngliche Kurve 194 mit Peaks 192 dargestellt. Im nächsten Schritt wird die Korrektur durchgeführt indem der Untergrund von der ursprünglichen Kurve subtrahiert wird. Die Differenzkurve 196 ist in Fig.17 b dargestellt. Man erkennt, daß bis auf ein Rauschen nur noch Peaks 192 im Spektrum vorhanden sind. Die gebinnte und Untergrund-korrigierte Kurve wird dann zur weiteren Kalibrierung verwendet.

Zunächst wird ein Startwert bestimmt. Das ist eine Linie, die dem Spektroskopiker gut bekannt ist. Beispiele hierfür sind: Linien, die in mehreren Ordnungen auftauchen, Na-Doppellinie, Hg253 o.ä., die ein besonders markantes Profil haben oder dem Spektroskopiker sonst gut bekannt sind. Diesen bekannten ersten Linien wird die bekannte, genaue Wellenlänge sowie die bekannte Ordnungszahl $m_0$ zugeordnet.

Weiterhin werden alle Spektrallinien, deren Intensität einen vorgegebenen Wert überschreiten, ermittelt. Dies geschieht, indem zunächst ein Schwellwert festgelegt wird und das Maximum jeder Linie, die diesen Schwellwert überschreitet, ermittelt wird. Eine Spektrallinie wird dann angenommen, wenn die Linienflanken auf beiden Seiten des Maximums monoton bis auf einem Prozentsatz von 30% des Maximums abfallen. Für jede Linie, die dieses Kriterium erfüllt, wird dann die genaue Position des Schwerpunkts ermittelt, sowie die Intensität und Halbwertsbreite (in Pixeln) der Linie. Die Position (=x-Wert) des Schwerpunkts braucht dabei keine ganzzahlige Zahl zu sein.

Das Ergebnis dieser Prozedur ist ein Katalog von Referenzlinien, deren Position auf dem Detektor und Eigenschaften genau bekannt sind. Für die bekannten ersten Linien in einer bekannten ersten Ordnung (Startordnung) wird dann eine Wellenlängenskala ermittelt, indem die Wellenlängen $\lambda_i$ durch ein Polynom 2.Ordnung gefittet werden nach:

$$\lambda_m(x) = a_0(m_0) + a_1(m_0)x + a_2(m_0)x^2$$

Dabei ist es günstig, wenn die bekannte erste Ordnung in der Mitte des Spektrums liegt. Der Wert der Ordnung kann ermittelt werden aus den Nenndaten des Gitters. Diese Wellenlängenskala dient nun als Basis für die Berechnung einer vorläufigen Wellenlängenskala für die nächste benachbarten Ordnungen $m \pm 1$ nach

$$\lambda_{m \pm 1}(x) = \lambda_m(x) \pm \Delta\lambda_{FSR} \,,$$

mit dem "Freien Spektralbereich" $\Delta\lambda_{FSR} = \lambda_m(x)/m$. Die vorläufige Wellenlängenskala ist ausreichend, um die Referenzlinien, die in dieser Ordnung liegen, zu identifizieren. Die Wellenlängen der Referenzlinien werden aus der Datei mit den genauen Wellenlängen (Atlas) genommen und zugeordnet. Aus den Atlaswerten und den genauen Schwerpunktspositionen der Referenzlinien wird durch einen Polynom-Fit erneut eine genaue Wellenlängenskala ermittelt. Dabei werden nur solche Referenzlinien berücksichtigt, für die der Atlaswert mit der Schwerpunkt-Wellenlänge der vorläufigen Wellenlängenskala innerhalb eines vorgegebenen Toleranzbereichs übereinstimmt.

Aus diesem Fit wird erneut eine vorläufige Wellenlängenskala für die nächste Ordnung $m \pm 2$ bestimmt, mit der dann wiederum die Referenzlinien identifiziert werden. Auf diese Weise werden alle Ordnungen abgearbeitet, für die eine Wellenlängenskala ermittelt werden soll. Es ergibt sich eine komplette Zuordnung der Wellenlängen zu den Positionen. Bei dem Verfahren werden Linien mit schlechten Fitparametern durch falschen Atlaswert oder falsche Zuordnung nicht berücksichtigt. Die Auswahl der "schlechten" Linien kann von Hand oder automatisch erfolgen. Im letzteren Fall müssen Qualitätskriterien für die Fitparameter in Form von Toleranzen eingefügt werden.

Wenn die Wellenlängenskala für jede Ordnung bestimmt ist, bilden die Koeffizienten eine Matrix. Die korrespondierenden Koeffizienten zeigen eine Ordnungsabhängigkeit. Diese Ordnungsabhängigkeit kann wiederum durch eine Fitfunktion beschrieben werden. Dabei hat sich für die Fitfunktion der Koeffizienten der 0.Ordnung ein Polynom als geeignet erwiesen, welches die 1/m-Abhängigkeit mitberücksichtigt:

$$a_0(m) = a_{00}m^{-1} + a_{01}m + a_{02}m^2 + a_{03}m^3$$

$$a_1(m) = a_{10} + a_{11}m + a_{12}m^2 + a_{13}m^3$$

$$a_2(m) = a_{20} + a_{21}m + a_{22}m^2 + a_{23}m^3$$

Auf diese Weise kann die Wellenlängenfunktion $\lambda(x)$ mittels weniger Koeffizienten beschrieben und gespeichert werden. Das Spektrum $I(\lambda)$ ergibt sich dann nach $I(\lambda) = I(\lambda(x))$.

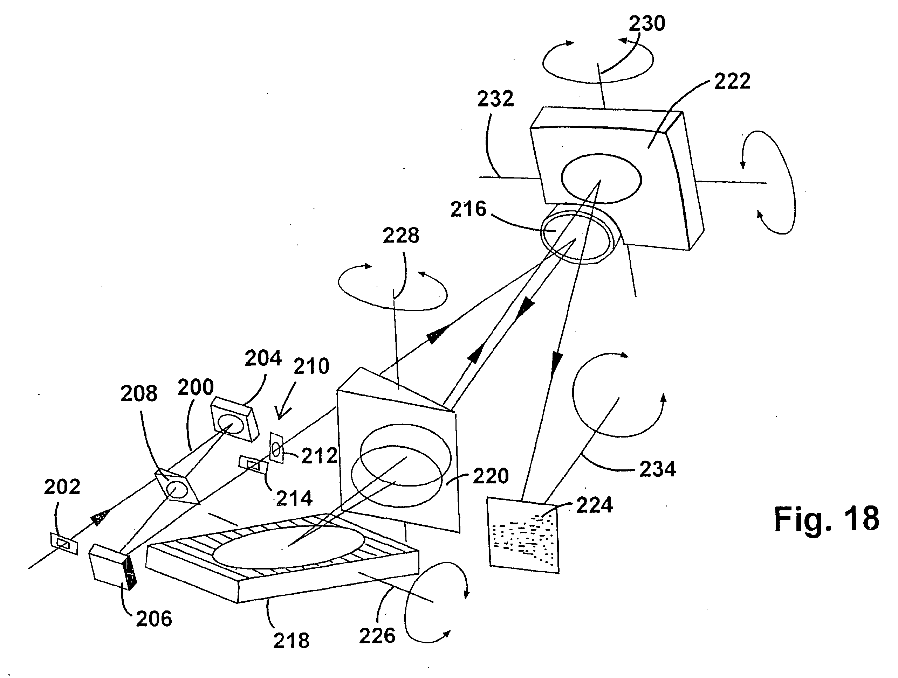

In Fig.18 ist ein Echelle-Spektrometer nach einem weiteren Ausführungsbeispiel gezeigt Die Strahlung, repräsentiert durch ihre optische Achse 200 wird vor Eintritt in das Spektrometer vorzerlegt. Hierfür ist eine Anordnung bestehend aus einem Eintrittsspalt 202, UV-beschichteten Toroid-Spiegeln 204 und 206, sowie einem Prisma 208 vorgesehen. Die Strahlung tritt dann durch eine Eintrittsspaltanordnung 210 mit zwei gekreuzten, versetzt angeordneten Eintrittsspalten 212 und 214. Ein Kollimatorspiegel 216 in Form eines sphärischen Spiegels reflektiert das Bündel in Richtung auf das Echelle-Gitter 218. Zwischen Echelle-Gitter 218 und Kollimatorspiegel 216 ist ein Prisma 220 zur Querdispersion angeordnet. Nach der Dispersion am Gitter 218 durchtritt die Strahlung erneut das Prisma und fällt auf einen Kameraspiegel 222. Der Kameraspiegel 222 fokussiert das dispergierte Licht in der Austrittsebene 224.

Das Gitter ist um eine Achse 226 drehbar gelagert. Das Prisma ist um eine Achse 228 drehbar gelagert. Der Kameraspiegel ist um zwei Achsen 230 und 232 drehbar gelagert und der Detektor (nicht dargestellt) ist um eine Achse 234 drehbar gelagert. Durch diese Anordnung ist eine Justierung des Spektrums in der Austrittsebene in eine Referenzlage ähnlich wie im ersten Ausführungsbeispiel möglich.

## Patentansprüche

1.   Verfahren zur Untergrundbestimmung und- Korrektur von breitbandigem Untergrund, enthaltend die Schritte:

(a) Glätten einer aufgenommenen optischen Spektralkurve mittels Moving Average, wobei die Breite des Moving Average etwa das Doppelte einer spektralen Linienbreite einer Referenzlinie beträgt,
(b) Bestimmen aller Werte der ursprünglichen Kurve, deren Wert über dem Wert der geglätteten Kurve liegt und Erzeugen einer Untergrundkurve durch Ersetzen dieser Werte durch den jeweiligen Wert der geglätteten Kurve,
(c) wenigstens zweifaches Wiederholen der Schritte (a) bis (b), wobei bei den Wiederholungen in Schritt (a) jeweils die im vorigen Schritt (b) erhaltene Untergrundkurve geglättet wird und in Schritt (b) als ursprüngliche Kurve genommen wird,
(d) Subtraktion der auf diese Weise in den Schritten (a) bis (c) erhaltenen Untergrundkurve von der ursprünglich aufgenommenen Spektralkurve .

## Claims

1.   Method for determining background and correction of broadband background, comprising the steps of:

(a) smoothing of the recorded optical spectral graph by applying moving average, wherein the width of the moving average is twice the average line width of a reference line,
(b) determining all values of the initial graph having a value higher than the value of the smoothed graph and generating a background graph by replacing such values by the value of the smoothed graph,
(c) repeating the steps (a) to (b) at least twice, wherein the background graph obtained in the respective preceding step (b) is smoothed in the repetition of the following step (a) and taken as initial graph in step (b),
(d) subtracting the background graph obtained in such a way in steps (a) to (c) from the initial graph.

## Revendications

1.   Procédé pour la détermination et la correction d'un fond à large bande, comprenant les étapes de :

(a) lissage par moyenne glissante d'une courbe de spectre optique enregistrée, la largeur de la moyenne glissante étant environ le double d'une largeur de ligne spectrale d'une ligne de référence,
(b) détermination de toutes les valeurs de la courbe d'origine dont la valeur est supérieure à la valeur de la courbe lissée et génération d'une courbe de fond en remplaçant ces valeurs par la valeur respective de la courbe lissée,
(c) au moins deux réitérations des étapes (a) à (b), chaque courbe de fond obtenue à l'étape précédente (b) étant lissée lorsque l'étape (a) est réitérée et est prise à l'étape (b) comme courbe d'origine,
(d) soustraction de la courbe de fond obtenue de cette manière aux étapes (a) à (c) de la courbe de spectre enregistrée à l'origine.

FIG. 1

FIG. 2

FIG. 3

Fig.4

EP 2 068 134 B1

**Fig. 5**

EP 2 068 134 B1

136

134

138

132

140

130

128

127

126

$\alpha_p$

60

146

# Fig. 6

**Fig. 7**

**Fig. 8**

**Fig. 9**

Fig. 10

EP 2 068 134 B1

Fig. 11

Fig. 15

Fig. 12

Fig. 14

Fig. 13

2     Fig.16a

5     Fig.16b

10     Fig.16c

50     Fig.16d

100     Fig.16e

192

194

190

**Fig. 17a**

192

196

**Fig. 17b**

Fig. 18

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **S. FLOREK ; H. BECKER-ROß ; T. FLOREK.** Adaptation of an echelle spectrograph to a large CCD detector. *Fresenius J. Anal. Chem.,* 1996, vol. 355, 269-271
- **E.J.SONNEVELD ; J.W.VISSER.** Automatic Collection of Powder Data from Photographs. *J.Appl.Cryst.,* 1975, vol. 8, 1
- **JUWHAN LIU ; JACK. L. KOENIG.** A New Baseline Correction Algorighm Using Objective Criteria. *Applied Spectroscopy,* 1987, vol. 41, 447
- **R.P.GOEHNER.** Background Subtract Subroutine for Spectral Data. *Anal.Chem.,* 1978, vol. 50, 1223